# EUROPÄISCHE PATENTSCHRIFT

(11) **EP 1 161 294 B1**
(45) Veröffentlichungstag und Bekanntmachung des Hinweises auf die Patenterteilung: **24.07.2002**
(21) Anmeldenummer: 99915626.8
(22) Anmeldetag: 16.03.1999
(51) Int. Cl.: B01F 5/06, B01F 11/00, B01J 19/00

(54) **AKTIVER MIKROMISCHER**
ACTIVE MICROMIXER
MICROMELANGEUR ACTIF

(43) Veröffentlichungstag der Anmeldung: 12.12.2001
(73) Patentinhaber: FRAUNHOFER-GESELLSCHAFT ZUR FÖRDERUNG DER ANGEWANDTEN FORSCHUNG E.V., 80636 München (DE)
(72) Erfinder: WOIAS, Peter, D-79102 Freiburg (DE)
(74) Vertreter: Schoppe, Fritz, Dipl.-Ing.
(86) Internationale Anmeldenummer: EP9901722
(87) Internationale Veröffentlichungsnummer: WO0054874

(56) Entgegenhaltungen:
- EP-A- 0 190 019
- DE-A- 19 611 270
- US-A- 4 467 964
- PATENT ABSTRACTS OF JAPAN vol. 11, no. 361 (C-459), 25. November 1987 (1987-11-25) & JP 62 132530 A (HITACHI LTD), 15. Juni 1987 (1987-06-15)

## Beschreibung

Die vorliegende Erfindung bezieht sich auf die Mischung von Flüssigkeiten und/oder Gasen und insbesondere auf einen aktiven Mikromischer zum Mischen kleiner Stoffmengen.

Die Mischung von Flüssigkeiten und/oder Gasen, d.h. von Fluiden, wird in verschiedensten Bereichen der Technik benötigt. Typische Anwendungsfelder sind beispielsweise die Mischung mehrkomponentiger Klebstoffe oder Vergußmassen in der Fertigungstechnik, Mischprozesse in der chemischen Synthese und Reaktionstechnik, die Herstellung homogener Emulsionen oder Mischvorgänge in der chemischen Analytik.

Neben bekannten Stapel- oder Batchprozessen, die beispielsweise mittels eines Rührkessels oder eines rotierenden Trommelmischers ausgeführt werden, werden Mischprozesse häufig auch im Durchfluß mittels sogenannter Durchflußmischer ausgeführt. Vor dem Hintergrund einer allgemeinen Miniaturisierung in nahezu allen technisch relevanten Anwendungsbereichen kommt der Entwicklung von Durchfluß-Mikromischern eine zunehmende Bedeutung zu. Mikromischer haben im Unterschied zu Makromischern eine kleine Geometrien und/oder kleine Durchsätze. Durchsätze, die von Mikromischern erzeugt werden, liegen bei Flüssigkeiten typischerweise unter 1 1/Stunde. Typische Geometrien eines Mikromischers liegen im Bereich von µm bis zu einigen mm.

Generell lassen sich die bekannten Mischer in einerseits statische Mischer und andererseits aktive Mischer aufteilen. Zunächst wird auf die statischen Mischer eingegangen. Aus technischer Sicht beruhen Durchfluß-Mikromischer häufig auf dem Konzept des sogenannten statischen Mischers, das auch aus der makroskopischen Technik beispielsweise zur Durchmischung von mehrkomponentigen Klebstoffen bekannt ist. Diese Mischer sind passive Komponenten, d.h. sie verwenden keine separat zugeführte Zusatzenergie, um eine Durchmischung der Ausgangskomponenten zu erzielen. Um eine möglichst homogene Mischung zu erhalten, sind je nach fluidischen Gegebenheiten Diffusions- und/oder Turbulenzeffekte wirksam. Das Mischverhältnis der zugeführten Ausgangskomponenten kann durch entsprechende Einstellung der Stoffströme extern oder durch das Design des Mischelements, z.B. über eine Querschnittsdimensionierung der durchströmten Struktur, festgelegt werden.

In Mikrostrukturen bestehen im Unterschied zu markroskopischen Systemen generell laminare Strömungsverhältnisse. Turbulente Strömungen, die eine effektivere Mischung erlauben würden, sind in statischen Mikromischern nicht nutzbar. Dadurch wird die Diffusionszeit bzw. die korrespondierende Diffusionslänge zur bestimmenden Größe für die Effizienz des Mischprozesses. In bekannten Mikromischerkonzepten wird diese Größe durch die im folgenden Maßnahmen beschriebenen reduziert.

Durch mehrfache laterale Aufspaltung und abwechselnde Schichtung der zugeführten Fluidströme in einem Mikrokanalsystem werden im Auslaß des Mikromischers möglichst dünne, parallel verlaufende Partialströme der zu mischenden Komponenten erzeugt. Die auf diese Weise stark vergrößerten Grenzflächen zwischen den Partialströmen sowie die geringen Ausdehnungen der einzelnen Partialströme reduzieren die kritischen Diffusionslängen lateral zur Strömungsrichtung und erlauben im Vergleich zu einer einfachen Zweiphasenströmung eine wesentlich schnellere Mischung durch Diffusion. Die Lamination wird sowohl einstufig in Multiparallel-Konfigurationen (siehe beispielsweise Kämper et al., Microfluidic Components for Biological and Chemical Microreactors, Proc. of the IEEE MEMS-97 Workshop, 26.-30. Januar 1997, Nagoya, Japan, p.338-343) als auch mehrstufig durch Serienschaltung gleichartiger Laminatoren (siehe Hessel et al., Potential and Realisation of Microreactors, Proc. of the International Symposium on Microsystems, Intelligent Materials and Robots, Sendai, Japan, September 1995) realisiert.

Eine weitere bekannte Anordnung, die in Miyake et al., Micromixer with Fast Diffusion, Proc. of the IEEE MEMS-93 Workshop, 07.-10. Februar 1993, Fort Lauderdale, Florida, p. 248-253 beschrieben ist, besteht aus einem Düsenarray an der Seitenwand eines Mikrokanals, über welches eine der zu mischenden Komponenten direkt in die im Kanal strömende zweite Komponente injiziert wird. Diese Anordnung nutzt wiederum hauptsächlich den Effekt der Grenzflächenvergrößerung sowohl lateral als auch longitudinal zur Strömungsrichtung, um die kritischen Diffusionslängen zu reduzieren.

Eine ähnliche Anordnung (Voldman et al., Liquid mixing studies with an integrated mixer/valve, Proc. of the µTAS '98 Workshop, 13.-16 Oktober 1998, Banff, Kanada, p. 181-184) verwendet anstelle der Düsenplatte ein Klappenventil, das an der Seitenwand eines Mikrokanals angeordnet ist und einen seitlich einmündenden zweiten Mikrokanal verschließt. Sobald im Seitenkanal mittels Überdruck ein Fluid eingespeist wird, öffnet das Klappenventil und erlaubt eine Zusammenführung und Durchmischung der beiden Teilströme im Hauptkanal. Maßnahmen zur Reduzierung der Diffusionslängen werden hier nicht getroffen.

Im Gegensatz zu statischen Mischern, bei denen keine Zusatzenergie zur Durchmischung aufgewendet wird, nutzen die sogenannten aktiven Mikromischer eine separat zugeführte Zusatzenergie, um den Mischprozess zu unterstützen oder herbeizuführen.

Die DE 196 11 270 A1 beschreibt einen Mikromischer zur Handhabung kleinster Flüssigkeitsmengen. Derselbe umfaßt einen strukturierten Siliziumchip, der mit einer Pyrex-Glasplatte einen Silizium-Glas-Verbund bildet. Der strukurierte Silizium-Chip enthält die Strukturen einer Mikroejektionspumpe mit einem Zulaufkanal, einer Pumpkammer und einem Auslaßkanal sowie einen weiteren Zulaufkanal, der mit dem Auslaßkanal der Mikroejektionspumpe verbunden ist. Alternativ können beide Zulaufkanäle in die Pumpkammer führen. Sowohl die Einlaßkanäle als auch der Auslaßkanal sind ebenfalls wie die Pumpkammer in einer Ebene in dem Silizium-Chip strukturiert. In einem Belademodus wird die Pumpkammer gefüllt, indem die miteinander zu vermischenden Flüssigkeiten aus den Zulaufkanälen und aus dem Auslaßkanal in die Pumpkammer gesaugt werden. In einem Entlademodus wird der Inhalt der Pumpkammer in Tropfenform über den Auslaßkanal aus einer Auslaßöffnung abgegeben. Der Auslaßkanal endet dabei seitlich an der Chipkante in einer freien Öffnung. Die Einstellung der Mischverhältnisse geschieht durch geeignete Variation der Querschnitte von Einlaß- und Auslaßkanälen, durch Einstellung einer geeigneten Arbeitsfrequenz der Pumpenmembran und/oder durch das Abtrennen einzelner Einlaßkanäle mit Hilfe externer Ventile.

Eine weiterer aktiver Mischer ist in Yotsumoto et al., Fabrication of an integrated mixing/reaction micro flow cell for µTAS, Proc. of the µTAS '98 Workshop, 13.-16. Oktober 1998, Banff, Kanada, p. 185-188 beschrieben. Hier wird ein statischer Mischer über ein Mikrokanalsystem mit einem nachgeschalteten Oberflächenwellenbauelement kombiniert, das als Ultraschallgenerator mit einer Frequenz im Bereich von 10 MHz eingesetzt wird.

Statische Mischer nach dem Laminarströmungskonzept weisen zur Reduzierung der Diffusionslängen typische Kanalbreiten im Bereich einiger 10 µm bis hinab zu einigen µm auf. Dadurch besteht grundsätzlich die Gefahr der Verstopfung durch Partikel. Des weiteren bedingt das Konzept eine vergleichsweise komplexe Gestaltung des Kanalsystems und erhöht somit häufig die Komplexität des Herstellungsverfahrens sowie die Größe der meist planaren Chipstrukturen, wodurch solche Mischerkonzepte teuer werden. Durch komplexe Faltung der Strömungsführung besteht überdies die Gefahr der Sedimentation in Totzonen. Bei Befüllung dieser stark parallel verzweigten Kanalstrukturen besteht die Gefahr, daß einzelne Seitenzweige sich nicht mit Flüssigkeit füllen und somit nicht zur Mischung beitragen. Seriengeschaltete mehrstufige Mikromischer können zwar mit einfacheren Einzelstufen realisiert werden, die die genannten Nachteile im geringeren Maße aufweisen. Die mehrstufige Anordnung erhöht jedoch wiederum die Chipgrößen sowie zusätzlich die gesamte Verweilzeit im Mischer. Generell ist festzustellen, daß in statischen Mischern aus fluidmechanischen Gründen die Mischqualität durch die Strömungsgeschwindigkeit beeinflußt wird und mit Abnahme der Strömungsgeschwindigkeit abnimmt.

Der in der DE 196 11 270 A1 beschriebene Mischer basiert auf einem Tropfendosierkonzept und ist somit nicht im echten Durchflußbetrieb einsetzbar. Dieses Konzept ist dadurch, daß sowohl zur Mischung als auch zur Fluidförderung dieselbe Mikroejektionspumpe verwendet wird, gegenüber Störeinflüssen empfindlich, wie sie beispielsweise durch eine von Medieneigenschaften abhängige Meniskusbildung am Auslaß oder der Ablagerung von Partikeln am Auslaß resultieren. Des weiteren sind durch die technologisch eingestellte Breite der Einlaßund Auslaßkanäle nur fest vorgegebene Mischverhältnisse realisierbar. Medieneigenschaften, wie z.B. die Viskosität und damit auch die Temperatur oder Partikeldichte, beeinflussen gleichfalls das Strömungsverhalten der gesamten Struktur und limitieren daher den Einsatzbereich.

Die Serienschaltung aus statischem und aktivem Mischer verwendet zur aktiven Mischung das Ultraschallprinzip mittels SAW bei einer Frequenz von 10 MHz. Es ist bekannt, daß bei diesem Prinzip, bedingt durch den geringen Wirkungsgrad des SAW eine sehr hohe elektrische Leistung benötigt wird, um ausreichend mechanische Energie in das Medium einzubringen. Der gesamte Wirkungsgrad der Anordnung ist daher niedrig.

Die Aufgabe der vorliegenden Erfindung besteht darin, einen aktiven Mischer zu schaffen, der in der Herstellung weniger aufwendig ist und andererseits eine Zuverlässigkeit, eine gute Mischwirkung und eine hohe Flexibilität liefert, um in verschiedenartigen Situationen eingesetzt werden zu können.

Diese Aufgabe wird durch einen aktiven Mikromischer nach Patentanspruch 1 gelöst.

Der vorliegenden Erfindung liegt die Erkenntnis zugrunde, daß das Fördern des gemischten Fluids einerseits und das Vermischen andererseits soweit als möglich getrennt werden müssen, um einen aktiven Mikromischer zu erhalten, dessen Mischqualität relativ unabhängig von der geförderten Menge ist, bzw. der es erlaubt, in einem Bereich von zu fördernden Mengen eine gute Mischqualität sicherzustelllen, der also flexibel und zuverlässig ist. Zum Mischen wird erfindungsgemäß eine Membran mittels einer an derselben befestigten Anregungseinrichtung, die ein Aktor oder auch ein Teil eines Aktors sein kann, ausgelenkt. Die Membran definiert zusammen mit einem Substratelement eine Mischkammer, die jedoch ohne komplizierte Formgebungen auskommt, da eine Mischwirkung durch Zusammenwirken der Membran und einem Auslaß, der gegenüber der Membran in dem Substratelement eingebracht ist, erreicht wird. Insbesondere entsteht durch Auslenkung der Membran durch die auf derselben angeordneten Anregungseinrichtung zu dem Auslaß hin ein Druckstoß, der eine Vermischung des Fluids in der Nähe der Auslaßöffnung bewirkt. Durch diesen Druckstoß bei jeder Auslenkung der Membran zu dem Auslaß hin wird das ansonsten laminare Strömungsprofil im Auslaß stark gestört, was zu einer sehr effektiven Reduzierung der Diffusionslängen durch eine durch die Membran bewirkte dreidimensionale Verwirbelung führt.

Bei dem bevorzugten Ausführungsbeispiel der vorliegenden Erfindung liegt der Auslaß in dem Bereich der Membran, der die größte Auslenkung zeigt, was beispielsweise in der Mitte der Membran sein kann. Die zumindest zwei Einlässe in die Mischkammer liegen bevorzugterweise am Rand der Membran, derart, daß das Fluid durch die Mischkammer einen möglichst langen Weg zurücklegen muß, bis es in die Nähe des Auslasses kommt, derart, daß die beiden zu mischenden Fluide bereits durch die sich hin- und her bewegende Membran gewissermaßen einer "Vormischung" unterzogen werden, bevor sie durch den Druckstoß an dem Auslaß vollends verwirbelt werden.

Ein weiterer Vorteil des Zusammenwirkens der Membran und des der Membran gegenüberliegenden Auslasses besteht darin, daß, wenn die Membran von dem Auslaß weg ausgelenkt wird, Fluid aus dem Auslaß wieder in die Kammer eingesaugt wird, um mit dem Inhalt der Mischkammer vermischt zu werden. Dieser Mischeffekt ist am größten, wenn der Auslaß dort angeordnet ist, wo die Membran die größte Auslenkung hat. Das selbe trifft für den Druckstoß bei der Abwärtsbewegung der Membran zu. Daher wird es bevorzugt, den Auslaß und die Membran so anzuordnen, daß der Auslaß in dem Bereich der Membran ist, wo die höchste Auslenkung der Membran auftreten kann. Wird aus bestimmten Gründen der Auslaß in einem Bereich der Membran angeordnet, der eine geringere als die maximale Auslenkung hat, so wird der Effekt zwar abnehmen, jedoch immer noch vorhanden sein. Für die vorliegende Erfindung ist es daher lediglich von Bedeutung, daß an dem Bereich, wo der Auslaß bezüglich der Membran angeordnet ist, die Membran eine Auslenkung haben kann, derart, daß ein Druckstoß in Richtung des Auslasses ausgeübt werden kann, um die dreidimensionale Verwirbelung zu erreichen.

Bevorzugte Ausführungsbeispiele der vorliegenden Erfindung werden nachfolgend bezugnehmend auf die beiliegenden Zeichnungen detailliert erläutert. Es zeigen:
- Fig. 1: einen Querschnitt durch einen aktiven Mischer gemäß einem ersten Ausführungsbeispiel der vorliegenden Erfindung;
- Fig. 2: eine Unteransicht des Membranelements von Fig. 1;
- Fig. 3: einen Querschnitt durch einen aktiven Mischer gemäß einem zweiten Ausführungsbeispiel der vorliegenden Erfindung;
- Fig. 4: eine Unteransicht des Membranelements des in Fig. 3 gezeigten aktiven Mischers;
- Fig. 5: eine Querschnittansicht des aktiven Mischers, in der die Situation bei von dem Substratelement weg ausgelenkter Membran dargestellt ist; und
- Fig. 6: eine Schnittansicht des aktiven Mischers zur Veranschaulichung der Situation bei zu der Auslaßöffnung hin ausgelenkter Membran.

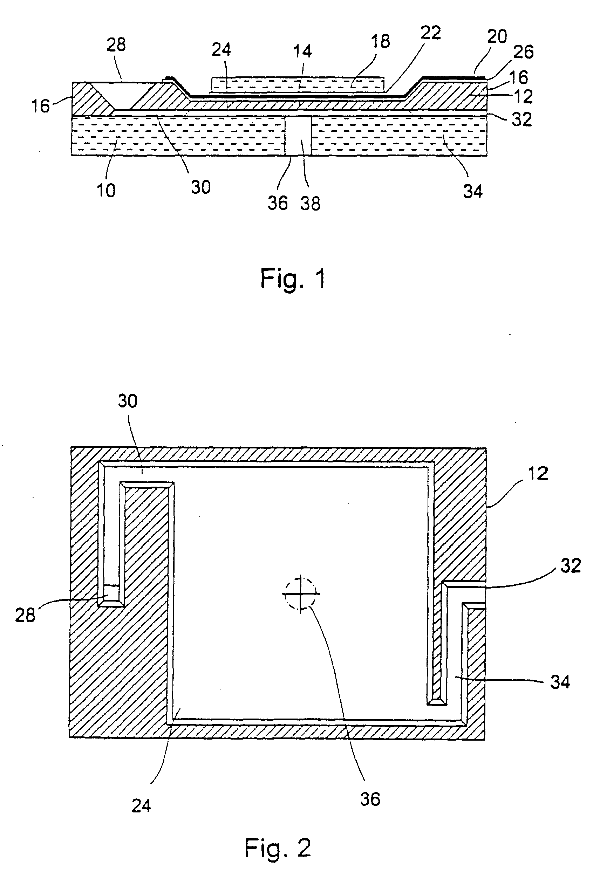

Fig. 1 zeigt einen aktiven Mikromischer mit einem Substratelement 10 und einem Membranelement 12, die aus Silizium, Metall, Glas und/oder Kunststoff gebildet sind und vorzugsweise planare Chipstrukturen sind. Das Substratelement und das Membranelement sind durch ein für die verschiedenen Materialien geeignetes Verbindungsverfahren, wie z.B. anodisches Bonden, Silicon-Fusion-Bonden, oder Kleben, fluidisch dicht aufeinander montiert. Das Membranelement 12 umfaßt eine dünne Membran 14 sowie einen Randbereich 16. Die dünne Membran bzw. die Strukurierung des Membranelements kann durch bekannte Herstellungsverfahren realisiert werden. Hierfür kommen beispielsweise in Frage:
- bei Silizium anisotropes, (durch Plasamaprozesse) gerichtetes oder isotropes Ätzten;
- bei Kunstoff Spritzguß oder Prägen;
- bei Glas Ätzen, Laserbearbeitung oder Direktstrukturierung von photosensitivem Glas; und
- bei Metall mechanische Bearbeitung, Ätzen oder Prägen.

Auf einer Hauptoberfläche der Membran 14 ist ein Aktor 18 befestigt. Bei einem bevorzugten Ausführungsbeispiel der vorliegenden Erfindung ist der Aktor 18 als piezoelektrischer Aktor ausgeführt. Für Fachleute ist es jedoch offensichtlich, daß andere Antriebsprinzipien, d.h. Aktoren, verwendet werden können, um die Membran 14 zu treiben. Dies könnten beispielsweise elektrostatische Aktoren in Form eines Kondensators, magnetische Aktoren usw. sein. Für die Beschreibung der vorliegenden Erfindung wird jedoch im Nachfolgenden von einem piezoelektrischen Aktor 14 als bevorzugtem Aktor ausgegangen.

Der piezoelektrische Aktor 14 ist von bekannter Bauart und umfaßt eine dünne Scheibe aus piezoelektrisch aktivem Material, die auf ihrer Oberseite und auf ihrer Unterseite jeweils metallisiert ist. Zur Kontaktierung der unteren Metallelektrode des Piezoaktors ist die Oberseite, d.h. die erste Hauptoberfläche, des Membranelements 12 ebenfalls metallisiert, was in Fig. 1 durch eine Membranelektrode 20 dargestellt ist. Als Verbindungsmittel zwischen dem piezoelektrischen Aktor 14 und der Membran bzw. der Membranelektrode 20 kann einerseits ein Klebeverfahren oder andererseits ein Lötverfahren verwendet werden, wie es durch eine Kleber- oder Lotschicht 22 in Fig. 1 symbolisch dargestellt ist. Andere geeignete Verbindungsverfahren können ebenfalls eingesetzt werden.

Die leitfähige Verbindung zwischen der Membranelektrode 20 und der unteren Aktorelektrode ist durch ein Lötverfahren automatisch gegeben. Beim Klebeverfahren ist eine ausreichend dünne Kleberschicht erforderlich, damit die üblicherweise rauhen Oberflächen beider Metallisierungen an einer oder mehreren Stellen in direkten Kontakt kommen können. Alternativ könnte auch ein leitfähiger Kleber und dergleichen eingesetzt werden.

Bevorzugterweise wird eine elektrische Isolation der Potentiale an der Membranelektrode 20 von dem Fluid in einer Mischkammer 24 erreicht, indem eine Isolatorschicht 26 zwischen der Membranelektrode 20 und dem Membranelement vorgesehen wird. Alternativ könnte statt der dünnen Isolatorschicht 26 ein elektrisch nicht-leitendes Membranmaterial, wie z.B. Kunststoff oder Glas, eingesetzt werden.

Die Mischkammer 24 wird durch das Membranelement 12 einerseits und das Substratelement 10 andererseits definiert. Dazu kann wahlweise im Substratelement 10 oder im Membranelement 12 oder in beiden Elementen eine Einsenkung realisiert sein. Bei dem in Fig. 1 gezeigten Ausführungsbeispiel umfaßt das Membranelement 12 eine Einsenkung, wie es am linken Rand von Fig. 1 sichtbar ist. Die laterale Form der Mischkammer 24 ist durch geeignete Fertigungsverfahren beliebig gestaltbar. Es wird jedoch bevorzugt, daß die Mischkammer 24 flach ausgelegt ist, d.h. daß die vertikale Abmessung geringer als die lateralen Abmessungen ist. Die vertikale Abmessung sollte darüberhinaus in der Größe der mit dem Membranaktor 14 erzielbaren Abwärtsbewegung liegen, die beispielsweise 15 µm betragen kann. Die vertikale Messung der Mischkammer 24, d.h. die Abmessung der Mischkammer senkrecht zur Substratelementoberfläche bzw. senkrecht zur anderen Hauptoberfläche der Membran 14, soll insbesondere die mögliche Auslenkung der Membran nicht um Größenordnungen übersteigen. Andererseits wird die vertikale Abmessung der Mischkammer 24 bevorzugterweise so groß gewählt, daß das Passieren der zu mischenden Medien bzw. von eventuell in den zu mischenden Medien vorhandene Partikeln ohne größeren Strömungswiderstand und ohne Verstopfung der Struktur möglich ist. Typische Abmessungen für die Mischkammer liegen im Bereich von 5 µm und 100 µm.

In die Mischkammer 24 münden in beliebiger Kombination seitlich, vertikal bzw. schräg durch das Membranelement 16 oder auch vertikal bzw. schräg durch das Substratelement 10 zumindest zwei Zuführungskanäle für zumindest zwei zu mischende Flüssigkeiten. In Fig. 1 ist ein Fall gezeichnet, bei dem eine Einlaßöffnung 28 durch den Randbereich 16 des Membranelements 12 in einen Zuführungskanal 30 mündet. Die andere Einlaßöffnung 32 verläuft zwischen Membranelement 12 und Substratelement 10, derart, daß kein Durchbruch des Membranelements 12 erforderlich ist und steht über einen entsprechenden Zuführungskanal 34 ebenfalls mit der Mischkammer 24 in fluidischer Verbindung. Vorzugsweise im Zentrum der Mischkammer 24 befindet sich eine Auslaßöffnung 36 des aktiven Mischers, die über einen Auslaßkanal 38, dessen Länge der Dicke des Substratelements 10 entspricht, mit der Mischkammer 24 in fluidischer Verbindung ist. Selbstverständlich ist es nicht erforderlich, daß der Auslaßkanal entlang seiner Länge immer den gleichen Durchmesser hat. Die Auslaßöffnung 36 durch das Substratelement 10 hindurch kann eine beliebige Form annehmen. An dieser Stelle sei darauf hingewiesen, daß die Anordnung der Auslaßöffnung 36 im Zentrum der Membran 14, d.h. dort wo diese die höchste Auslenkung hat, lediglich eine bevorzugte Ausgestaltung des aktiven Mischers ist. Für die Mischwirkung aufgrund des Zusammenspiels der Membran und der Auslaßöffnung ist es lediglich erforderlich, daß die Auslaßöffnung gegenüber der Membran in einem Bereich des Substratelements 10 angeordnet ist, wo die Membran noch eine Auslenkung hat. Dieser Bereich kann daher durchaus je nach Anwendungsfall aus der Mitte der Mischkammer 24 versetzt sein und einem Bereich der Membran gegenüberliegen, der eine geringere Auslenkung als die maximale Auslenkung der Membran in einem anderen Bereich der Membran hat. Hier wird die Mischwirkung zwar etwas nachlassen, je nach Anwendungsfall dürfte dieselbe jedoch dennoch ausreichend sein.

Die Abmessungen der Zuführungskanäle und des Auslaßkanals sind vorzugsweise so gewählt, daß sie die Zufuhr und Abfuhr der jeweiligen Medien nicht beispielsweise über einen Druckabfall entlang der Kanäle wesentlich beeinflussen oder beeinträchtigen. Insbesondere sind die Einlaßöffnungen, die Zuführungskanäle und der Auslaßkanal bevorzugterweise groß genug ausgelegt, um bei eventuell partikelbehafteten Medien ein einwandfreies Passieren der Partikel zu ermöglichen.

Fig. 2 zeigt eine Ansicht von unten des Membranelements 12, um eine mögliche Ausgestaltung der Einlaßöffnungen 28, 32, sowie der Zuführungskanäle 30, 34 des aktiven Mischers darzustellen. In Fig. 2 ist mit den Bezugszeichen 36 die Auslaßöffnung angedeutet, wobei dieselbe jedoch gestrichelt angegeben ist, um zu veranschaulichen, daß dieselbe selbstverständlich nicht in dem Membranelement 12 vorgesehen ist, sondern in dem gegenüberliegenden Substratelement 10 (Fig. 1). Aus Fig. 2 ist zu sehen, daß es bevorzugt wird, die Einlaßkanäle 31, 34 zu konfigurieren, daß die zu vermischenden Medien an den Diagonalenenden einer quadratischen Mischkammer 24 eingespeist werden.

An dieser Stelle sei darauf hingewiesen, daß die Mischkammer 24 zumindest zwei Einlässe und einen Auslaß aufweist. Ein Einlaß in die Mischkammer wird durch die Stelle definiert, an der ein Zuführungskanal von einer Einlaßöffnung in die Mischkammer eintritt. Diese Stelle ist durch einen entsprechenden Zuführungskanal gegeben, der auf seiner anderen Seite in einer Öffnung des Mischers nach außen endet. Dasselbe gilt analog für den Auslaß. Der Auslaß wird durch die Stelle definiert, an der ein zu einer Auslaßöffnung führender Auslaßkanal aus der Mischkammer austritt.

Wenn der aktive Mischer, dessen Membranelement in Fig. 2 gezeigt ist, z.B. drei oder vier Medien miteinander vermischen soll, so könnten an den beiden noch freien Ecken ebenfalls Einlaßöffnungen bzw. entsprechende Einlaßkanäle angelegt werden, derart, daß die Mischkammer 24 von allen Ecken gespeist wird. Es wird bevorzugt, daß der Abstand zwischen den Einlässen in die Mischkammer 24 und dem Auslaß (36, 38) in dem Substratelement 10 (Fig. 1) maximal gewählt wird, derart, daß das Fluid einen möglichst großen Bereich der Mischkammer 24 durchfließen muß, bevor es zu dem Auslaß gelangt, um bereits durch die sich hin- und herbewegende Membran 14 (Fig. 1) vorgemischt zu werden, bevor die Fluide dann durch das Zusammenspiel der Membran und den Auslaß fertig gemischt werden. Sollen mehr als vier Fluide gemischt werden, so sind beispielsweise fünf-, sechs- oder sieben-eckige Mischkammern 24 bzw. im Grenzfall runde Mischkammern denkbar, die entlang ihres Umfangs mit Fluideinlässen versehen sind, um für jeden Fluideinlaß in die Mischkammer einen möglichst großen Abstand zum Auslaß in dem Substratelement 10 (Fig. 1) vorzusehen.

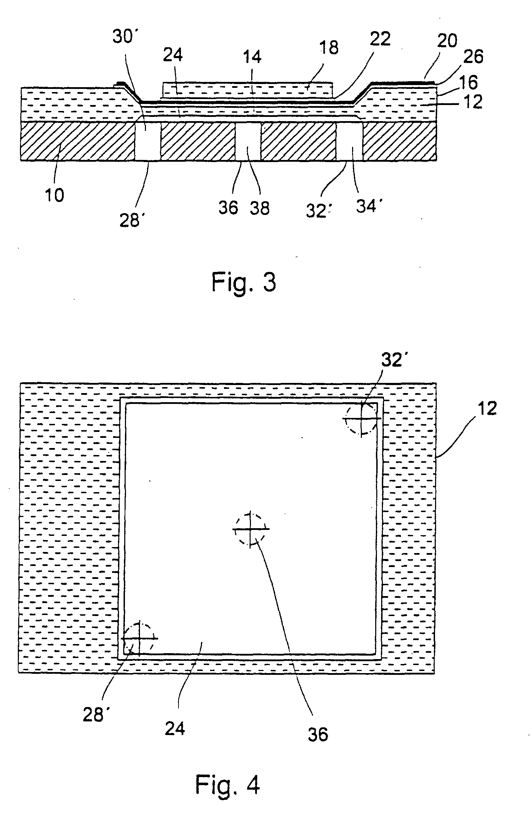

Fig. 3 zeigt einen aktiven Mischer gemäß einem weiteren Ausführungsbeispiel der vorliegenden Erfindung, bei dem sämtliche Öffnungen in dem Substratelement 10 vorgesehen sind, d.h. die eine Einlaßöffnung 28' mit einem zugeordneten Einlaßkanal 30' sowie eine weitere Einlaßöffnung 32' mit einem zugeordneten weiteren Einlaßkanal 34'. Genauso wie in Fig. 1 ist jedoch die Auslaßöffnung 36 gegenüber der Membran 14 angeordnet. Das in Fig. 3 gezeigte Ausführungsbeispiel hat in der Herstellung den Vorteil, daß die Einlaßöffnungen bzw. Einlaßkanäle im gleichen Fertigungsschritt wie die Auslaßöffnung bzw. der Auslaßkanal hergestellt werden können, und daß das Membranelement 12 keiner derartigen Behandlung unterzogen werden braucht. Aus Fig. 3 ist ferner zu sehen, daß auch hier die Mischkammer 24 durch eine Einsenkung in dem Membranelement 12 realisiert ist. Alternativ könnte dieselbe, wie es bereits ausgeführt worden ist, ebenfalls durch eine Einsenkung in dem Substratelement 10 oder durch eine Einsenkung in beiden Elementen realisiert werden. Der Aktor ist wieder als piezoelektrischer Aktor 18 ausgeführt.

Fig. 4. zeigt eine Unteransicht des in Fig. 3 gezeigten Membranelements 12, wobei wieder gestrichelt die in dem Substratelement 10 vorhandenen Einlässe bzw. Einlaßöffnungen 28', 32' dargestellt sind, deren Anordnung bezüglich dem Auslaß bzw. der Auslaßöffnung 36 im Substratelement 10 den Vorteil hat, daß dieselben möglichst weit von der Aulaßöffnung 36 beabstandet angeordnet sind, um einen möglichst großen "Vormisch"-Effekt zu erreichen.

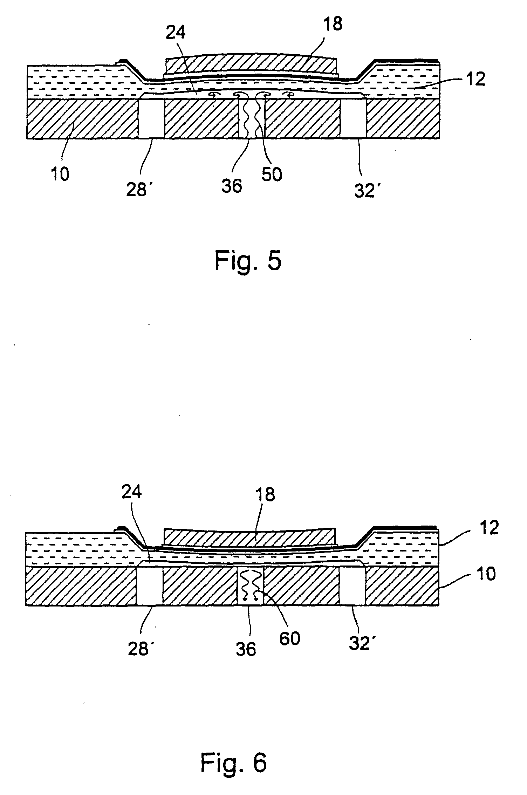

Im Nachfolgenden wird anhand der Fig. 5 und der Fig. 6 der Betrieb des erfindungsgemäßen aktiven Mikromischers beschrieben. Zum Betrieb des Mischers werden die Einlaßöffnungen 28, 32 bzw. 28', 32' mit Einspeisevorrichtungen verbunden, die die jeweiligen Ausgangskomponenten, d.h. die zu mischenden Fluide, aktiv zu dosieren. Das Mischverhältnis wird somit explizit durch externe Einstellung der Dosierraten der Einspeisevorrichtungen eingestellt, wodurch beliebige von außen steuerbare Mischverhältnisse möglich werden, die auch dynamisch verändert werden können. Der Aktor 18 zusammen mit der Membran führt daher im wesentlichen die Aufgabe des Mischens insbesondere im Zusammenspiel mit der Auslaßöffnung 36 durch, während das Einspeisen des Fluids durch die externen dosierratenmäßig steuerbaren Einspeisevorrichtungen bewirkt wird.

Wenn die Mischkammer 24 eine geringe Höhe hat, entsteht in derselben im stationären Fall üblicherweise ein zum Auslaß 36 rotationssymmetrisches Strömungsbild, daß aus Segmenten der jeweils zugeführten Teilströme besteht. Die jeweiligen Grenzschichten zwischen diesen Teilströmen laufen auf den gemeinsamen vorzugsweise zentralen Auslaß 36, 38 zu. Zur Durchführung von Mischprozessen wird der Verbund aus Piezoaktor 18 und Membran durch Anlegen einer elektrischen Spannung am Piezoaktor periodisch nach oben (Fig. 5) und nach unten (Fig. 6) ausgelenkt. Dadurch wird das Volumen der Mischkammer 24 periodisch vergrößert und verkleinert, wodurch das im Ruhezustand laminare Strömungsbild im Inneren der Kammer periodisch stark gestört wird und sich somit eine Vermischung ergibt, die die bereits mehrmals erwähnte "Vormischung" ist. Daher wird es bevorzugt, den Einlaß in die Mischkammer möglichst weit entfernt von dem Auslaß anzuordnen. Für andere Anordnungen, bei denen der Auslaß nicht zentral ist bzw. der Abstand zwischen den Einlässen und dem Auslaß nicht maximal ist, dürfte dieser "Vormischeffekt" zwar abnehmen, es wird jedoch immer noch eine Vermischung aufgrund des Zusammenspiels der Membran und des Auslasses auftreten.

Darüber hinaus wird insbesondere bei der Aufwärtsbewegung des Aktors 18 (Fig. 5) Flüssigkeit 50 aus dem Auslaß wieder in die Kammer 24 eingesaugt und mit dem in der Mischkammer 24 vorhandenen Fluid erneut vermischt. Da der Membranhub bei dem bevorzugten Ausführungsbeispiel der vorliegenden Erfindung im Zentrum der Mischkammer am höchsten ist, zeigt sich hier der stärkste Mischeffekt. Im Randbereich der Mischkammer 24 nimmt der Mischeffekt dagegen ab.

Darüber hinaus entstehen vor allem bei der Abwärtsbewegung der Membran (Fig. 6) und in geringerem Maße auch bei der Aufwärtsbewegung in dem Auslaß 36, 38 des Mikromischers, der vorzugsweise am Ort der höchsten Membranauslenkung angeordnet ist, Druckstöße in Strömungsrichtung, die das im statischen Zustand laminare Strömungsprofil 60 im Auslaß periodisch stark stören und so zu einer sehr effizienten Reduzierung der Diffusionslänge durch dreidimensionale Verwirbelung führen.

Die Auslenkung des Aktors 18 sollte in beide Richtungen hinreichend groß gewählt werden, beispielsweise 10 µm nach unten und 5 µm nach oben bei einer Kammertiefe von 15 µm, um einen signifikanten Anteil des Mischkammervolumens periodisch zu bewegen und so in der Mischkammer bereits den Vormischeffekt zu erzielen. Darüber hinaus sollte bei der Abwärtsbewegung des Aktors 18 ein ausreichend großer Hub eingestellt werden, um im Auslaß ausreichend hohe Druckstöße zur Verwirbelung der Strömungsfäden 16 zu erzeugen.

Wie es bereits ausgeführt worden ist, stellt die Anregung der Membran 14 mittels eines piezoelektrischen Aktors 18 lediglich eine bevorzugte Anregungsmöglichkeit dar. Alternativ können andere Mittel eingesetzt werden. Es sollte jedoch darauf geachtet werden, daß die Frequenz der Membranbewegung hoch genug ist, um abhängig von der durch die Einspeisevorrichtungen eingestellten Auslaß-Strömungsrate eine ausreichend schnelle Periodenfolge und damit eine homogene Durchmischung zu erreichen. Eine obere Grenze der Frequenz ist dadurch gegeben, daß durch die Trägheit der Fluide keine deutliche Ausbildung von Druckwellen mehr zustande kommt. Typische optimale Werte der Antriebsfrequenz dürften im Bereich von etwa 50Hz bis zu einigen kHz liegen. Die Signalform, mit der die Membran 14 angeregt wird, ist prinzipiell beliebig. Es wird jedoch eine rechteckförmige Signalform bevorzugt, um insbesondere bei der Abwärtsbewegung der Membran hohe Drucktransienten zu erzielen.

Die vorliegende Erfindung schafft somit zuverlässige, einfach herstellbare und flexibel einsetzbare Mikromischer, die keine komplizierten Kanalstrukturen und nicht zuviel Platz auf einem Chip benötigen, weshalb die Herstellung günstig ist. Weiterhin sind die erfindungsgemäßen aktiven Mikromischer zuverlässig und gegenüber einer Verstopfung relativ wenig anfällig, da sämtliche Kanaldurchmesser ausreichend groß gewählt werden können. Darüber hinaus ist die Ausgaberate durch die Eingaberate der zu mischenden Fluide nahezu beliebig einstellbar, wobei lediglich die Frequenz des Anregungssignals für die Membran auf eine veränderte Ausgaberate angepaßt werden sollte, um einen gleich hohen Mischungsgrad zu erreichen. Zusammenfassend liefert die vorliegende Erfindung daher folgende Vorteile:
- es kann ein sehr geringes Mischkammervolumen bis in den sub-µl- Bereich realisiert werden, wodurch das für viele Anwendungen kritische Totvolumen der Anordnung sehr klein ist, was die genaue Mischung auch kleinster Stoffmengen erlaubt;
- die Flußraten, mit denen die Einspeisevorrichtungen in den Mikromischer einspeisen, haben kaum Auswirkungen auf das Mischergebnis, als einzige Größe sollte jedoch die Frequenz des Ansteuersignals angepaßt werden;
- es können beliebige Mischverhältnisse realisiert werden, da das Mischverhältnis extern durch die Einspeiseraten definiert wird und nicht von der Mischergeometrie abhängig ist, wodurch in Verbindung mit dem geringen Totvolumen der Mischkammer auch zeitlich variable Mischprofile sehr schnell gefahren werden können;
- die durchströmte Struktur des Mischers kann einfach mit ausreichendem Querschnitt strömungstechnisch günstig ausgelegt werden, wodurch auch partikelhaltige Medien ohne Gefahr von Sedimentation in Totzonen oder Verstopfung verwenden bzw. gemischt werden können;
- die Betriebsfrequenz des bevorzugterweise verwendeten Piezoaktors liegt maximal im kHz-Bereich und damit signifikant unter der Betriebsfrequenz beispielsweise eines SAW-Wandlers, wodurch der Leistungsverbrauch des erfindungsgemäßen aktiven Mischers begrenzt ist, bzw. der Wirkungsgrad des aktiven Mischers hoch ist.

## Patentansprüche

1. Aktiver Mikromischer mit folgenden Merkmalen:
einem Membranelement (12) mit einem Randbereich (16) und einer Membran (14), wobei auf einer Hauptoberfläche der Membran eine Einrichtung (18) zum Auslenken der Membran (14) angeordnet ist;
einem Substratelement (10), das mit dem Randbereich (16) des Membranelements (12) verbunden ist, um eine Mischkammer (24) zwischen der anderen Hauptoberfläche der Membran (14) und dem Substratelement (10) zu definieren,
wobei die Mischkammer (24) zumindest zwei Einlässe (28, 30, 32, 34; 28', 30', 32', 34') zum Einspeisen von zumindest zwei zu mischenden Fluiden aufweist,
wobei die Mischkammer (24) einen Auslaß (36, 38) aufweist, der in dem Substratelement (10) vorgesehen ist, und
wobei der Auslaß (36, 38) so in dem Substratelement (10) angeordnet ist, daß derselbe einem auslenkbaren Bereich der Membran (14) gegenüberliegt, daß bei einer Auslenkung der Membran in Richtung des Auslasses (36, 38) ein Druckstoß auftritt, der eine Vermischung des Fluids (60) in der Nähe des Auslasses (36, 38) bewirkt.

2. Aktiver Mikromischer nach Patentanspruch 1, bei dem der Auslaß (36, 38) an einem Ort in dem Substratelement (10) angeordnet ist, dem der Bereich der Membran (14) mit der größten Auslenkung gegenüberliegt.

3. Aktiver Mikromischer nach Anspruch 1 oder 2, bei dem die Einlässe (28, 30, 32, 34; 28', 30', 32', 34') derart bezüglich des Auslasses (36, 38) angeordnet sind, daß ihre Abstände zum Auslaß (36, 38) möglichst groß sind.

4. Aktiver Mikromischer nach einem der vorhergehenden Ansprüche, bei dem die zumindest zwei Einlässe (28, 30, 32, 34; 28', 30', 32', 34') dort in der Mischkammer (24) angeordnet sind, wo ein Bereich der Membran (14) vorhanden ist, der eine minimale Auslenkung ausführen kann.

5. Mikromischer nach einem der vorhergehenden Ansprüche, bei dem die Membran (14) eine allseitig befestigte Membran ist, und bei dem die Einlässe (28, 30, 32, 34; 28', 30', 32', 34') in der Nähe des Rands der Membran angeordnet sind, während der Auslaß (36, 38) in dem Bereich des Substratelements (10) angeordnet ist, der der Mitte der Membran (14) gegenüberliegt.

6. Aktiver Mikromischer nach einem der vorhergehenden Ansprüche, bei dem die Mischkammer (24) zumindest in der Nähe des Auslasses (36, 38) eine flache Form hat, wobei eine Abmessung der Mischkammer parallel zum Substratelement größer als eine Abmessung der Mischkammer senkrecht zum Substratelement ist, derart, daß durch Auslenkung der Membran von dem Substratelement weg Fluid (50) aus dem Auslaß zurück in die Mischkammer bewegt wird, um mit dem in der Mischkammer vorhandenen Fluid vermischt zu werden.

7. Aktiver Mikromischer nach einem der vorhergehenden Ansprüche, bei dem entweder zumindest zwei Einlässe (28', 32') in dem Substratelement (10) vorgesehen sind, oder zumindest zwei Einlässe (28, 32) in dem Membranelement vorgesehen sind, oder ein Einlaß in dem Membranelement und ein Einlaß im dem Substratelement vorgesehen sind, oder zwei Einlässe zwischen dem Membranelement und dem Substratelement vorgesehen ist.

8. Aktiver Mikromischer nach einem der vorhergehenden Ansprüche, bei dem die Membran (14) des Membranelements (12) aus Silizium, Kunststoff, Glas oder Metall aufgebaut ist.

9. Aktiver Mikromischer nach einem der vorhergehenden Ansprüche, bei dem die Membran (14) von der Mischkammer (24) elektrisch isoliert ist.

10. Aktiver Mikromischer nach einem der vorhergehenden Ansprüche, bei dem die Mischkammer (24) durch eine Einsenkung in dem Substratelement (10) und/oder durch eine Einsenkung in dem Membranelement (12) definiert ist.

11. Aktiver Mikromischer nach einem der vorhergehenden Ansprüche, bei dem die Mischkammer (24) eine Höhe zwischen 5 und 100 µm hat.

12. Aktiver Mikromischer nach einem der vorhergehenden Ansprüche, bei dem die Einlässe (28, 30, 32, 34; 28', 30', 32', 34') und der Auslaß (36, 38) derart dimensioniert sind, daß eine Verstopfung durch Partikel in den zu mischenden Fluiden vermieden wird und/oder ein Druckabfall im wesentlichen vermieden wird.

13. Aktiver Mikromischer nach einem der vorhergehenden Ansprüche, der ferner folgende Merkmale aufweist:
eine Mehrzahl von Einspeisevorrichtungen, die mit den Einlaßöffnungen (28, 32; 28', 32) gekoppelt sind und über Fluidkanäle (30, 34; 30', 34') mit den Einlässen in die Mischkammer fluidisch verbunden sind, wobei die Einspeisevorrichtungen insbesondere dynamisch auf unterschiedliche Dosierraten einstellbar sind, um das Mischverhältnis des aktiven Mikromischers festzulegen bzw. dynamisch zu variieren.

14. Aktiver Mikromischer nach einem der vorhergehenden Ansprüche, bei dem die Membran (14) und/oder die Einrichtung (18) zum Auslenken der Membran derart ausgestaltet sind, daß die Auslenkung der Membran (14) bezüglich einer Ruhestellung derselben zu dem Auslaß (36, 38) hin größer als die Auslenkung der Membran (14) bezüglich der Ruhestellung derselben von dem Auslaß weg ist.

15. Aktiver Mikromischer nach einem der vorhergehenden Ansprüche, bei dem die Mischkammer (24), die Membran (14) und/oder die Einrichtung (18) zum Auslenken der Membran derart ausgestaltet sind, daß eine Gesamtauslenkung der Membran (14) in der Größenordnung einer Höhe der Mischkammer (24) liegt.

16. Aktiver Mikromischer nach einem der vorhergehenden Ansprüche, bei dem die Frequenz einer an die Einrichtung (18) zum Auslenken anlegbaren Spannung einstellbar ist, um in Abhängigkeit von einer vorbestimmten Auslaß-Strömungsrate einen erwünschten Mischungsgrad zu erreichen.

17. Aktiver Mikromischer nach einem der vorhergehenden Ansprüche, bei dem eine an die Einrichtung (18) zum Auslenken der Membran anlegbare Spannung rechteckförmig ist, um möglichst hohe Drucktransienten zu erreichen.

18. Aktiver Mikromischer nach einem der vorhergehenden Ansprüche, bei dem eine Frequenz eines an die Einrichtung (18) zum Auslenken der Membran (14) anlegbaren Wechselsignals zwischen 50 Hz und 10 kHz liegt.

19. Aktiver Mikromischer nach einem der vorhergehenden Ansprüche, bei dem die Einrichtung (18) zum Auslenken der Membran (14) als Piezoaktor, als elektrostatischer Aktor oder als magnetischer Aktor ausgeführt ist.

## Claims

1. Active micromixer comprising:
a membrane element (12) comprising a marginal region (16) and a membrane (14), a means for deforming said membrane (14) being arranged on a main surface of said membrane;
a substrate element (10) connected to said marginal region (16) of said membrane element (12) to define a mixing chamber (24) between the other main surface of said membrane (14) and said substrate element (10),
said mixing chamber (24) comprising at least two inlets (28, 30, 32, 34; 28', 30', 32', 34') for feeding at least two fluids to be mixed,
said mixing chamber (24) having an outlet (36, 38) provided in said substrate element (10), and
said outlet (36, 38) being arranged in said substrate element (10) so that it opposes a deformable region of said membrane (14), that there is a pressure wave when said membrane is deformed towards said outlet (36, 38), said pressure wave causing a mixing of said fluid (60) in the vicinity of said outlet (36, 38).

2. Active micromixer according to claim 1, in which said outlet (36, 38) is arranged at a place in said substrate element (10) opposing said region of said membrane (14) having the greatest deformation.

3. Active micromixer according to claims 1 or 2, in which said inlets (28, 30, 32, 34; 28', 30', 32', 34') are arranged relative to the outlet (36, 38) such that their distances to the outlet (36, 38) are as great as possible.

4. Active micromixer according to one of the preceding claims, in which said at least two inlets (28, 30, 32, 34; 28', 30', 32', 34) are arranged at a place in said mixing chamber (24) where a region of said membrane (14) is present, which can perform a minimal deformation.

5. Micromixer according to one of the preceding claims, in which said membrane (14) is a membrane fixed on all sides, and in which said inlets (28, 30, 32, 34; 28', 30', 32', 34') are arranged in the vicinity of the margin of said membrane while the outlet (36, 38) is arranged in the region of said substrate element (10) opposing the centre of said membrane (14).

6. Active micromixer according to one of the preceding claims, in which said mixing chamber (24), at least in the vicinity of said outlet (36, 38), has a flat shape, a dimension of said mixing chamber parallel to said substrate element being greater than a dimension of said mixing chamber perpendicular to said substrate element such that by deforming said membrane away from said substrate element fluid (50) is moved back from said outlet to said mixing chamber to be mixed with the fluid present in the mixing chamber.

7. Active micromixer according to one of the preceding claims, in which either at least two inlets (28', 32') are provided in said substrate element (10) or at least two inlets (28, 32) are provided in said membrane element or an inlet is provided in said membrane element and an inlet is provided in said substrate element or two inlets are provided between said membrane element and said substrate element.

8. Active micromixer according to one of the preceding claims, in which said membrane (14) of said membrane element (12) is formed of silicon, plastic, glass or metal.

9. Active micromixer according to one of the preceding claims, in which said membrane (14) is electrically insulated from said mixing chamber (24).

10. Acive micromixer according to one of the preceding claims, in which said mixing chamber (24) is defined by a depression in said substrate element (10) and /or by a depression in said membrane element (12).

11. Active micromixer according to one of the preceding claims, in which said mixing chamber (24) has a height ranging between 5µm and 100µm.

12. Active micromixer according to one of the preceding claims, in which said inlets (28, 30, 32, 34; 28', 30', 32', 34') and said outlet (36, 28) are sized such that a clogging by particles in said fluids to be mixed is prevented and/or a pressure drop is substantially prevented.

13. Active micromixer according to one of the preceding claims, further comprising:
a plurality of feeding devices coupled with said inlet ports (28, 32; 28', 32') and fluidically connected to said inlets into said mixing chamber via fluid channels (30, 34; 30', 34'), wherein said feeding devices are especially dynamically settable to establish or vary dynamically, respectively, the mixing ratio of said active micromixer.

14. Active micromixer according to one of the preceding claims, in which said membrane (14) and/or said means (18) for deforming said membrane are formed such that the deformation of said membrane (14) relative to its rest position towards said outlet (36, 38) is greater than the deformation of said membrane (14) relative to its rest position away from said outlet.

15. Active micromixer according to one of the preceding claims, in which said mixing chamber (24), said membrane (14) and/or said means (18) for deforming said membrane are formed such that a total deformation of said membrane (14) is in the order of a height of said mixing chamber (24).

16. Active micromixer according to one of the preceding claims, in which the frequency of a voltage appliable to said means (18) for deforming is adjustable to obtain a desired degree of mixing depending on a predetermined outlet flow rate.

17. Active micromixer according to one of the preceding claims, in which a voltage appliable to said means (18) for deforming said membrane is rectangularly shaped to obtain maximally high pressure transients.

18. Active micromixer according to one of the preceding claims, in which a frequency of an AC signal appliable to said means (18) for deforming said membrane (14) ranges between 50Hz and 10kHz.

19. Active micromixer according to one of the preceding claims, in which said means (18) for deforming said membrane (14) is implemented as a piezoactor, an electrostatic actor or a magnetic actor.

## Revendications

1. Micromélangeur actif, aux caractéristiques suivantes:
un élément de membrane (12) avec une zone de bordure (16) et une membrane (14), sur une surface principale de la membrane étant disposé un dispositif (1) destiné à déformer la membrane (14);
un élément de substrat (10) qui est assemblé avec la zone de bordure (16) de l'élément de membrane (12), pour définir une chambre de mélange (24) entre l'autre surface principale de la membrane (14) et l'élément de substrat (10) ;
la chambre de mélange (24) présentant au moins deux entrées (28, 30, 32, 34 ; 28', 30', 32', 34') pour l'alimentation d'au moins deux fluides à mélanger,
la chambre de mélange (24) présentant une sortie (36, 38) prévue dans l'élément de substrat (10), et
la sortie (36, 38) étant disposée dans le substrat de telle sorte qu'elle se situe vis-à-vis d'une zone déformable de la membrane (14), qu'il se produise, lors d'une déformation de la membrane en direction de la sortie (36, 38), un coup de pression qui entraîne un mélange du fluide (60) dans le voisinage de la sortie (36, 38).

2. Micromélangeur actif selon la revendication 1, dans lequel la sortie (36, 38) est disposée à un endroit dans l'élément de substrat (10) situé vis-à-vis de la zone de la membrane (14) à la déformation la plus grande.

3. Micromélangeur actif selon la revendication 1 ou 2, dans lequel les entrées (28, 30, 32, 34 ; 28', 30', 32', 34') sont disposées par rapport à la sortie (36, 38) de telle sorte que leurs distances par rapport à la sortie (36, 38) soient aussi grandes que possible.

4. Micromélangeur actif selon l'une des revendications précédentes, dans lequel les au moins deux entrées (28, 30, 32, 34 ; 28', 30', 32', 34') sont disposées dans la chambre de mélange (24) à l'endroit où est présente une zone de la membrane (14) pouvant réaliser une déformation minimale.

5. Micromélangeur actif selon l'une des revendications précédentes, dans lequel la membrane (14) est une membrane fixée de tous les côtés et dans lequel les entrées (28, 30, 32, 34 ; 28', 30', 32', 34') sont disposées à proximité du bord de la membrane, tandis que la sortie (36, 38) est disposée dans la zone de l'élément de substrat (10) située vis-à-vis du centre de la membrane (14).

6. Micromélangeur actif selon l'une des revendications précédentes, dans lequel la chambre de mélange (24) a, au moins à proximité de la sortie (36, 38), une forme plane, une dimension de la chambre de mélange parallèle à l'élément de substrat étant plus grande qu'une dimension de la chambre de mélange perpendiculaire à l'élément de substrat, de sorte que, par déformation de la membrane en s'éloignant de l'élément de substrat, du fluide (50) soit déplacé à nouveau de la sortie vers la chambre de mélange, pour être mélangé au fluide présent dans la chambre de mélange.

7. Micromélangeur actif selon l'une des revendications précédentes, dans lequel soit au moins deux entrées (28', 32') sont prévues dans l'élément de substrat (10), soit au moins deux entrées (28, 32) sont prévues dans l'élément de membrane et une entrée est prévue dans l'élément de substrat, soit deux entrées sont prévues entre l'élément de membrane et l'élément de substrat.

8. Micromélangeur actif selon l'une des revendications précédentes, dans lequel la membrane (14) de l'élément de membrane (12) est conçue en silicium, en matière synthétique, en verre ou en métal.

9. Micromélangeur actif selon l'une des revendications précédentes, dans lequel la membrane (14) est isolée électriquement de la chambre de mélange (24).

10. Micromélangeur actif selon l'une des revendications précédentes, dans lequel la chambre de mélange (24) est définie par un évidement dans l'élément de substrat (10) et/ou par un évidement dans l'élément de membrane (12).

11. Micromélangeur actif selon l'une des revendications précédentes, dans lequel la chambre de mélange (24) a une hauteur comprise entre 5 et 100 µm.

12. Micromélangeur actif selon l'une des revendications précédentes, dans lequel les entrées (28, 30, 32, 34 ; 28', 30', 32', 34') et la sortie (36, 38) sont dimensionnées de telle sorte que soient substantiellement évitées une obturation par des particules dans les fluides à mélanger et/ou une chute de pression.

13. Micromélangeur actif selon l'une des revendications précédentes, présentant, par ailleurs, les caractéristiques suivantes :
une pluralité de dispositifs d'alimentation couplés aux ouvertures d'entrée (28, 32; 28', 32) et connectés en fluide, par l'intermédiaire de canaux à fluide (30, 34 ; 30', 34'), aux entrées dans la chambre de mélange, les dispositifs d'alimentation pouvant être réglés, en particulier, dynamiquement à des quantités de dosage différentes, afin d'établir ou de varier dynamiquement le rapport de mélange du micromélangeur actif.

14. Micromélangeur actif selon l'une des revendications précédentes, dans lequel la membrane (14) et/ou le dispositif (18) destiné à déformer la membrane sont réalisés de telle sorte que la déformation de la membrane (14), par rapport à une position de repos de celle-ci, vers la sortie (36, 38) est plus grande que la déformation de la membrane (14), par rapport à la position de repos de celle-ci, en s'éloignant de la sortie.

15. Micromélangeur actif selon l'une des revendications précédentes, dans lequel la chambre de mélange (24), la membrane (14) et/ou le dispositif (18) destiné à déformer la membrane sont réalisés de telle sorte qu'une déformation totale de la membrane soit de l'ordre de grandeur d'une hauteur de la chambre de mélange (24).

16. Micromélangeur actif selon l'une des revendications précédentes, dans lequel la fréquence d'une tension pouvant être appliquée sur le dispositif (18) destiné à déformer est réglable, afin d'obtenir, en fonction d'un débit de sortie prédéterminé, un degré de mélange souhaité.

17. Micromélangeur actif selon l'une des revendications précédentes, dans lequel une tension pouvant être appliquée sur le dispositif (18) destiné à déformer la membrane est rectangulaire, afin d'obtenir des transitoires de pression aussi élevés que possible.

18. Micromélangeur actif selon l'une des revendications précédentes, dans lequel une fréquence d'un signal alternatif pouvant être appliqué sur le dispositif (18) destiné à déformer la membrane (14) est comprise entre 50 Hz et 10 kHz.

19. Micromélangeur actif selon l'une des revendications précédentes, dans lequel le dispositif (18) destiné à déformer la membrane (14) se présente sous forme d'actuateur piézoélectrique, d'actuateur électrostatique ou d'actuateur magnétique.
